# EUROPÄISCHE PATENTANMELDUNG

(11) **EP 2 199 753 A2**
(43) Veröffentlichungstag der Anmeldung: **23.06.2010**
(21) Anmeldenummer: 09015480.8
(22) Anmeldetag: 15.12.2009
(51) Int. Cl.: G01D 5/48, F15B 15/28

(54) **Fluidischer Zylinder mit einer Mikrowellen-Messanordnung und Verfahren zur Erfassung wenigstens eines Parameters**

(30) Priorität: 20.12.2008 DE 102008064259
(71) Anmelder: FESTO AG & Co. KG, 73734 Esslingen (DE)
(72) Erfinder: Geisbusch, Lothar, 73760 Ostfildern (DE); Maier, Marcus, 73760 Ostfildern (DE); Reininger, Thomas, 73249 Wernau (DE)
(74) Vertreter: Vetter, Hans

(57) **Zusammenfassung**

Es wird ein fluidischer Zylinder (21) mit einer Mikrowellen-Messanordnung und ein Verfahren zur Erfassung wenigstens eines Parameters, wie die Kolbenposition oder Kolbengeschwindigkeit, vorgeschlagen, wobei eine Mikrowellen-Koppelsonde (19) Hohlleiterwellen in das Innere des Zylinders (21) einkoppelt und vom Kolben (23) reflektierte Hohlleiterwellen wieder auskoppelt. Eine Auswerteeinrichtung dient zur Erfassung des wenigstens einen Parameters durch Vergleich der der Mikrowellen-Koppelsonde (19) zugeleiteten HF-Signale mit den aus der reflektierten Hohlleiterwelle erzeugten HF-Signalen. Wenigstens ein Teil der Auswerteeinrichtung und die als Leiterbahnen ausgebildeten HF-Leitungen von und zu der Auswerteeinrichtung sind auf einer Platine (10) angeordnet. Auf dieser ist eine Laufzeit-Messeinrichtung (13) zur Erfassung der Platinen-Feuchtigkeit und/oder Ausbreitungsgeschwindigkeit der HF-Signale angeordnet, wobei die Auswerteeinrichtung zur Korrektur des wenigstens einen erfassten Parameters in Abhängigkeit der Signale der Laufzeit-Messeinrichtung (13) ausgebildet ist.

## Beschreibung

Die Erfindung betrifft einen fluidischen Zylinder mit einer Mikrowellen-Messanordnung zur Erfassung wenigstens eines Parameters mit den Merkmalen des Oberbegriffs des Anspruchs 1.

Eine derartige Mikrowellen-Messanordnung ist beispielsweise aus der DE 10205904 A1, der US-A 4588953 oder der EP 1040316 B1 bekannt und dient zur Erfassung von Parametern, wie der Kolbenposition oder der Kolbengeschwindigkeit. HF-Signale werden von einem HF-Generator zur Antenne beziehungsweise Mikrowellen-Koppelsonde und von dort zurück zu einer Auswerteeinrichtung über elektrische Leiter geführt. Die Ausbreitungsgeschwindigkeit der HF-Signale auf HF-Leitungen übt einen Einfluss auf das Messergebnis aus, das heißt, wenn sich die elektrischen Eigenschaften der Leitungen verändern, so wird das Messergebnis verfälscht. Bei einer Ausführung dieser HF-Leitungen als Leiterbahnen auf einer Leiterplatte können sich diese insbesondere in Abhängigkeit von Feuchtigkeit inder Weise verändern, dass die dielektrischen Eigenschaften beeinflusst werden. Dies führt zu Laufzeitfehlern der HF-Signale und als Folge davon zu verfälschten Messergebnissen.

Aus der DE 10 2006 052 790 ist eine Positionsmesseinrichtung zur Bestimmung der Position eines Messobjekts bekannt, bei der Mikrowellen mit Hilfe eines Antennenkörpers in einen Hohlleiter ausgekoppelt und aus dem Hohlleiter in den Antennenkörper eingekoppelt werden. Der Antennenkörper besteht aus einem dielektrischen Material, beispielsweise aus einem Kunststoff, und isoliert zwei Polflächen voneinander. Um die dielektrischen Eigenschaften des Antennenkörpers ermitteln und bei der Auswertung des Positionssignals mit einbeziehen zu können weist der Antennenkörper an einem dem Hohlleiter zugewandten und maximal vom Mikrowellengenerator entfernten Endbereich mehrere Schwingkreise auf, die einen Bruchteil der vom Mikrowellengenerator ausgesendeten Mikrowellen nahezu verlustfrei reflektieren können. Zur Ermittlung der feuchtigkeitsabhängigen Dielektrizitätszahl des Antennenkörpers wird eine vom Mikrowellengenerator erzeugte Mikrowelle in ihrer Frequenz so lange verändert, bis Resonanz auftritt, so dass anhand der aufgefundenen Resonanzfrequenz die aktuelle Dielektrizitätszahl der Antennenkörpers ermittelt werden kann.

Eine Aufgabe der Erfindung besteht daher darin, Laufzeitfehler infolge von Veränderungen der dielektrischen Eigenschaften zu kompensieren oder wenigstens zu minimieren, um exaktere Messergebnisse zu erzielen.

Diese Aufgabe wird erfindungsgemäß durch einen fluidischen Zylinder mit einer Mikrowellen-Messanordnung mit den Merkmalen des Anspruchs 1 gelöst.

In vorteilhafter Weise wird auf der mit den als Leiterbahnen ausgebildeten HF-Leitungen versehenen Platine eine Laufzeit-Messeinrichtung zur Erfassung der Feuchtigkeit und/oder Ausbreitungsgeschwindigkeit der HF-Signale angeordnet, durch die Veränderungen der Ausbreitungsgeschwindigkeit der HF-Signale als Folge von Veränderungen der dielektrischen Eigenschaften erfasst und einer Auswerteeinrichtung zugeführt werden können. Da diese Laufzeit-Nesseinrichtung auf derselben Platine angeordnet ist, wird davon ausgegangen, dass sich die gesamte Platine beispielsweise in Abhängigkeit von Feuchtigkeit an allen Stellen in gleicher Weise verändert. Die durch die Laufzeit-Messeinrichtung erfassten Korrekturwerte können dann zur Korrektur der Parameter-Messwerte, also beispielsweise Positions-Messwerte oder Geschwindigkeits-Messwerte, verwendet werden. Hierdurch können Laufzeitfehler kompensiert bzw. minimiert und exakte Messergebnisse auch bei sich verändernden dielektrischen Eigenschaften der Platine, beispielsweise in Abhängigkeit von Feuchtigkeit, erreicht werden.

Durch die in den Unteransprüchen aufgeführten Maßnahmen sind vorteilhafte Weiterbildungen und Verbesserungen der im Anspruch 1 angegebenen Anordnung möglich.

Die Auswerteeinrichtung besitzt zweckmäßigerweise einen Phasen- und Amplitudenvergleicher und einen damit verbundenen Mikrocontroller zur Auswertung der erfassten Phasendifferenzen beziehungsweise Amplitudenverhältnisse.

Der auf der Platine angeordnete Phasen- und Amplitudenvergleicher wird in vorteilhafter Weise durch Leiterbahnenelemente gebildet und ist insbesondere als Six-Port-Schaltung (Six-Port-Device) ausgebildet. Die ermittelten Korrekturwerte für Laufzeitveränderungen wirken sich somit direkt auf die Auswertesignale des Phasen- und Amplitudenvergleichers aus.

In einer zweckmäßigen konstruktiven Ausgestaltung der Six-Port-Schaltung besteht diese aus drei 90grad-Hybrid-Kopplern, einem Wilkinson-Teiler und einem Richtkoppler, wobei Leistungs- und/oder Pegelmesseinrichtungen für dadurch gebildete, um jeweils in Schritten von 90° zueinander versetzte Signale der zur Koppelsonde hinlaufenden und von dieser rücklaufenden HF-Signale vorgesehen sind, die mit dem Mikrocontroller zur Auswertung verbunden sind. Die 90grad-Hybrid-Koppler bestehen dabei bevorzugt aus jeweils vier ringförmig aneinander geschalteten Leiterbahnstücken, die jeweils eine Länge von λ/4 weisen. Eine solche Anordnung lässt sich einfach und kostengünstig als einfache Leiterbahnstruktur herstellen.

In der zur Mikrowellen-Koppelsonde führenden Leiterbahn für die HF-Signale ist in vorteilhafter Weise ein Richtkoppler zur Auskopplung eines Teils der hinlaufenden und eines Teils der von der Mikrowellen-Koppelsonde rücklaufenden HF-Signale angeordnet. Auch ein solcher Richtkoppler lässt sich in einfacher und kostengünstiger Weise durch Leiterbahnelemente realisieren.

In einer weiteren Ausgestaltung der Erfindung ist in einer der beiden den Richtkoppler mit dem Phasen- und Amplitudenvergleicher verbindenden Leiterbahnen eine ebenfalls als Leiterbahn ausgebildete Verzögerungseinrichtung zum Ausgleich der Länge der Leiterbahn zwischen Richtkoppler und Koppelsonde für die beiden zu vergleichenden HF-Signale angeordnet. Dies ist eine ergänzende Maßnahme zum Ausgleich von Veränderungen der dielektrischen Eigenschaften der Leiterbahnen, beispielsweise durch Feuchtigkeitseinwirkung. Diese Verzögerungseinrichtung kann beispielsweise als Grobausgleich dienen, während die Laufzeit-Messeinrichtung zur Feinkompen-sation, jedoch auch zur alleinigen Kompensation besonders geeignet ist.

Die Laufzeit-Messeinrichtung besteht ebenfalls in vorteilhafter Weise aus Leiterbahnstücken, insbesondere aus einem Mess-Leiterbahnstück, das eine vorzugsweise mit dem HF-Generator verbundene Einkopplungseinrichtung für HF-Signale und eine Auskopplungseinrichtung aufweist, die mit einer Resonanz-Messeinrichtung verbunden ist.

Das Mess-Leiterbahnstück weist bevorzugt eine Länge von λ/2 auf. Dabei besitzt die Resonanz-Messeinrichtung in vorteilhafter Weise eine mit dem Mikrocontroller verbundene Pegelmesseinrichtung, und der Mikrocontroller besitzt Mittel zur stufenweisen Frequenzveränderung des HF-Generators, um die jeweilige Resonanzfrequenz erfassen zu können. Dadurch lassen sich Verschiebungen der Resonanzfrequenz erfassen, die ein Maß für die Veränderungen der dielektrischen Eigenschaften des Mess-Leiterbahnstücks ist, von dem wiederum die Ausbreitungsgeschwindigkeit beziehungsweise Laufzeit der HF-Signale auf der Platine abgeleitet werden kann.

Eine mit dem Mikrocontroller verbundene weitere Pegelmesseinrichtung ist zur Erfassung der in die Laufzeit-Messeinrichtung eingespeisten HF-Leistung vorgesehen. Durch Vergleich der Werte der beiden Pegelmesseinrichtungen können weitere Informationen zur exakten Laufzeitkompensation gewonnen werden.

Eine den HF-Generator mit der Laufzeit-Messeinrichtung verbindende Leiterbahn besitzt zweckmäßigerweise einen Richtkoppler zur Auskopplung von zur Mikrowellen-Koppelsonde geführten HF-Signalen.

Zur Unterdrückung von unerwünschten Störungen ist das Ausgangssignal des HF-Generators zweckmäßigerweise über ein Oberwellen-Filter geführt.

Ein Ausführungsbeispiel der Erfindung ist in der Zeichnung dargestellt und in der nachfolgenden Beschreibung näher erläutert. Es zeigen:
- Figur 1: ein Blockschaltbild einer auf einer Platine angeordneten Auswerteeinrichtung mit Laufzeit-Mess-einrichtung und HF-Generator, die mit einer Mikrowellen-Koppelsonde einer an einem fluidischen Zylinder angeordneten Mikrowellen-Messanordnung verbunden sind,
- Figur 2: eine realitätsnahe Ausführung der in Figur 1 dargestellten elektronischen Komponenten, die auf der Platine angeordnet sind,
- Figur 3: eine schematische Darstellung eines Phasen- und Amplitudenvergleichers als Bestandteil der in Figur 2 dargestellten Six-Port-Schaltung und
- Figur 4: ein Signaldiagramm zur Erläuterung der Verschiebung der Resonanzfrequenz, die mittels der Laufzeit-Messeinrichtung zur weiteren Auswertung erfasst wird.

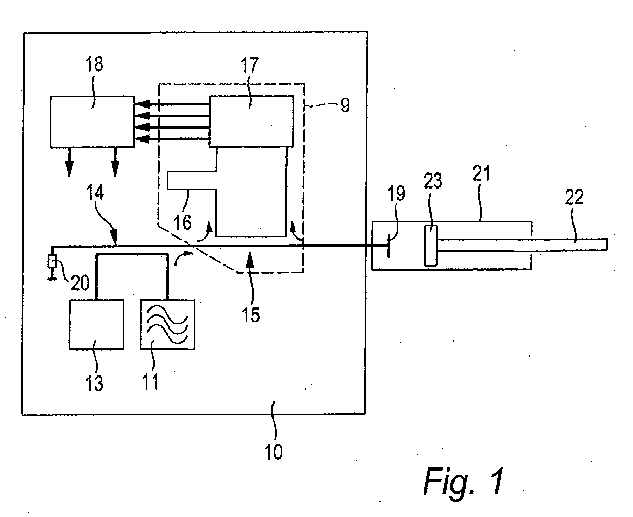

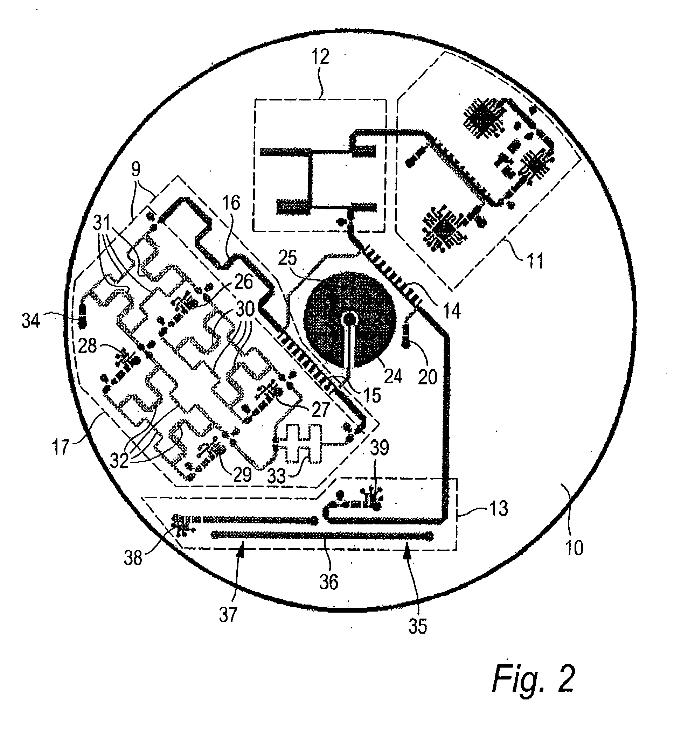

Bei dem in den Figuren 1 und 2 dargestellten Ausführungsbeispiel sind auf einer Platine 10 ein HF-Generator 11 (Hochfrequenz-Generator für Mikrowellen-Frequenzen), ein Oberwellenfilter 12, eine Laufzeit-Messeinrichtung 13, ein Richtkoppler 14, eine Six-Port-Schaltung 9 (Six-Port-Device) und ein Mikrocontroller 18 angeordnet, wobei die Six-Port-Schaltung 9 aus einem Phasen- und Amplitudenvergleicher 17, einer als Verzögerungsleiterbahn ausgebildeten Verzögerungseinrichtung 16 und einem weiteren Richtkoppler 15 besteht. In der schematischen Blockschaltung gemäß Figur 1 ist der Oberwellenfilter 12 zur Vereinfachung nicht dargestellt. Er dient zur Ausfilterung von Störsignalen, wobei in einer einfacheren Ausführung auch auf ihn verzichtet werden kann oder es werden andere Entstörmaßnahmen vorgesehen. Andererseits ist der Mikrocontroller 18 auf der als reale Ausführung dargestellten Platine 10 gemäß Figur 2 nicht zu erkennen. Er kann beispielsweise auf der Rückseite dieser Platine oder auch extern angeordnet sein.

Alle Leitungsverbindungen zwischen den Komponenten sind als Leiterbahnen ausgebildet. Der HF-Generator 11 ist mit der Laufzeit-Messeinrichtung 13 verbunden, die später noch näher erläutert werden soll. Ein Teil der HF-Signale wird über den ersten Richtkoppler 14 in eine zu einer als Antenne dienenden Mikrowellen-Koppelsonde 19 führenden Leitung eingekoppelt. Diese Leitung besitzt an einem Ende einen mit Masse verbundenen Abschlusswiderstand 20. Ein Teil der HF-Signale wird dann auf dem Weg zur Mikrowellen-Koppelsonde 19 mittels des zweiten Richtkopplers 15 ausgekoppelt und über die Verzögerungseinrichtung 16 dem Phasen- und Amplitudenvergleicher 17 zugeführt.

Die Mikrowellen-Koppelsonde 19 ist an einem üblicherweise als Zylinderdeckel ausgebildeten Endbereich eines fluidischen Zylinders 21 angeordnet und ist dabei in diesem nicht näher dargestellten Zylinderdeckel integriert. Im Zylinder 21 ist ein mit einer Kolbenstange 22 versehener Kolben 23 verschiebbar geführt. Dabei kann es sich auch um einen kolbenstangenlosen Kolben handeln. Über die Mikrowellen-Koppelsonde 19 wird eine Mikrowellen-Hohlleiterwelle in den Innenraum des Zylinders 21 eingekoppelt, die am Kolben 23 reflektiert und von der Mikrowellen-Koppelsonde 19 wieder aufgenommen wird, die dann als Empfangsantenne dient. Diese Vorgänge sind im eingangs angegebenen Stand der Technik näher beschrieben.

Die reflektierte und von der Mikrowellen-Koppelsonde 19 wieder erfasste Hohlwelle wird als HF-Signal wieder zurückgeführt und mittels des zweiten Richtkopplers 15 zum Teil ausgekoppelt und dem Phasen- und Amplitudenvergleicher 17 zugeführt. Dort findet ein Phasen- beziehungsweise Amplitudenvergleich zwischen den hinlaufenden und rücklaufenden HF-Signalen statt, wobei diese Messergebnisse als Maß für die Position des Kolbens 23 beziehungsweise dessen Geschwindigkeit oder Beschleunigung ausgewertet werden können. Die Messergebnisse werden daher dem Mikrocontroller 18 zugeführt. Die Auswertung der Phasendifferenz zur Positionsbestimmung des Kolbens 23 mittels eines Phasenvergleichers ist ebenfalls im eingangs angegebenen Stand der Technik näher beschrieben.

Die zur Mikrowellen-Koppelsonde 19 führende Leitung beziehungsweise Leiterbahn ist an eine Kontaktfläche 24 angeschlossen, die in nicht näher dargestellter Weise über einen Stift oder Draht mit der Mikrowellen-Koppelsonde 19 verbunden ist. Diese Kontaktfläche 24 ist von einer Massefläche 25 umgeben, die mit dem metallischen Zylinder 21 verbunden ist.

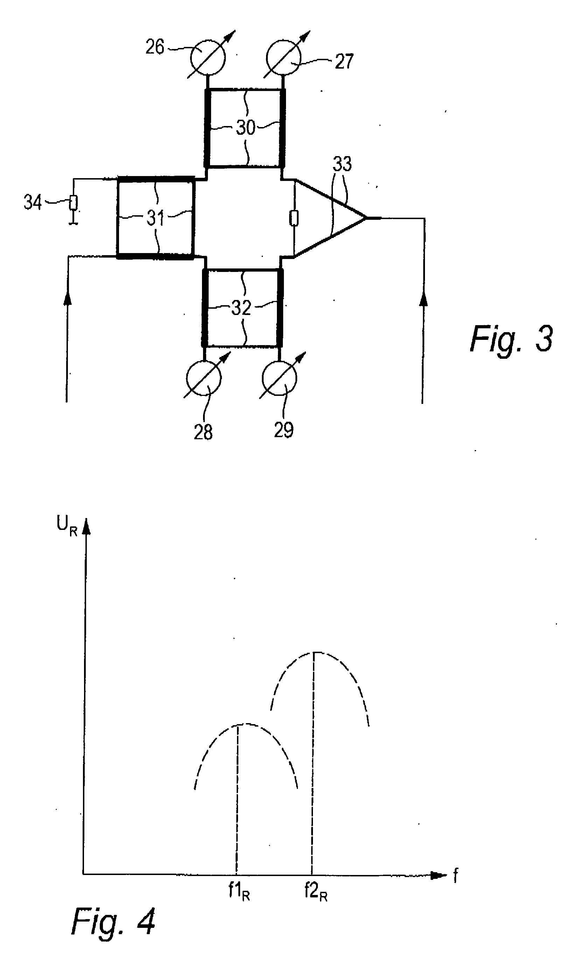

Der zum Phasen- beziehungsweise Amplitudenvergleich dienende Phasen- und Amplitudenvergleicher 17 als Bestandteil der in Figur 2 dargestellten Six-Port-Schaltung 9 ist in Figur 3 schematisch und in Figur 2 in Form von Leiterbahnen dargestellt. Solche einen Phasen- und Amplitudenvergleicher enthaltende Six-Port-Schaltungen, die häufig auch als Six-Port-Devices in der Literatur bezeichnet werden, sind beispielsweise aus IEEE Transactions on Microwave Theory and Techniques, Vol. 45, No. 12, Seiten 2414-2417, oder Vol. 47, No. 12, Seiten 2621-2624, oder Vol. MTT-23, No. 12, Seiten 978-984, oder Vol. MTT-25, No. 12, Seiten 1075-1083, bekannt und dort in ihrer Funktion und Wirkungsweise, insbesondere bezüglich des Phasen- und Amplitudenvergleichs, näher beschrieben. Auf eine ausführliche Beschreibung der Wirkungsweise kann daher hier verzichtet werden.

zur Messung des Reflexionsfaktors an der Mikrowellenkoppelsonde 19 beziehungsweise Antenne zur Erfassung der Phasenabweichung zwischen hinlaufender und rücklaufende welle werden Teile des vor- und rücklaufenden Signals additiv überlagert. Je nach Phase dieser Signale kommt es zu konstruktiver oder destruktiver Überlagerung, was zu entsprechenden Signalpegeln an den Ausgängen der Six-Port-Schaltung 9 führt. Diese Signalpegel werden mit Hilfe von Detektor-Schaltungen 26-29 gemessen. Diese unterschiedlich phasenverschobenen und dann überlagerten Signale werden den Detektor-Schaltungen 26-29 impedanzangepasst zugeführt. Durch diese Impedanzanpassung kann ein besserer Konversionsfaktor des Detektors erreicht werden, was sich positiv auf das Signal-zu-Rausch-Verhältnis auswirkt. Des Weiteren werden durch die Impedanzanpassung Reflexionen an den Detektor-Schaltungen 26-29 vermieden.

Die im Ausführungsbeispiel verwendete Six-Port-Schaltung 9 besteht aus drei 90grad-Hybrid-Kopplern 30-32, einem Wilkinson-Teiler 33 und dem zweiten Richtkoppler 15. Jeder 90grad-Hybrid-Koppler 30-32 besteht im Wesentlichen aus vier ringartig zusammengesetzten Leiterbahnen, die jeweils eine Länge von im Wesentlichen λ/4 besitzen. Ein 90grad-Hybrid-Koppler 30-32 splittet ein Eingangssignal in zwei Ausgangssignale auf, die gleiche Amplituden besitzen, aber deren Phasen eine Differenz von 90 Grad aufweisen. Ein Teil der von der Mikrowellen-Koppelsonde 19 rücklaufenden Signale wird dabei über den Wilkinson-Teiler 33 eingespeist, und ein Teil der zur Mikrowellen-Koppelsonde 19 hinlaufenden Signale wird über den mittleren 90grad-Hybrid-Koppler 31 eingespeist. An dessen zweitem Eingang ist ein an Masse liegender widerstand 34 geschaltet. Die über den Wilkinson-Teiler 33 und den 90grad-Hybrid-Koppler 31 zugeführten, miteinander zu vergleichenden Signale werden dann zur additiven Überlagerung den beiden übrigen 90grad-Hybrid-Kopplern 30 und 32 zugeführt, an deren Ausgängen die Detektor-Schaltungen 26-29 angeschlossen sind. Die Überlagerung durch die 90grad-Hybrid-Koppler 30 und 32 erfolgt so, dass an ihren Ausgängen Teile der zur Koppelsonde 19 hin- und von dieser rücklaufenden Signale überlagert werden, diese Überlagerung an den unterschiedlichen Ausgängen der 90grad-Hybrid-Koppler 30 und 32 aber mit unterschiedlichen Phasendifferenzen erfolgt. Diese Phasendifferenzen sind vorzugsweise 0 Grad, 90 Grad, 180 Grad und 270 Grad. Die Amplitude an den Ausgängen der 90grad-Hybrid-Koppler 30 und 32 wird im Wesentlichen durch die Phasendifferenz bestimmt, die zu konstruktiver oder destruktiver Überlagerung führt. Die als Pegel beziehungsweise Leistungsmesser dienenden Detektor-Schaltungen 26-29 führen dem Mikrocontroller 18 bei verschiedenen Frequenzen gemessene Pegelwerte zu, wobei dann vom Mikroprozessor durch einen Algorithmus auf die Kolbenposition beziehungsweise Kolbengeschwindigkeit geschlossen werden kann, indem zum Beispiel in einem Zwischenschritt die Phase des Reflexionsfaktors am Antenne-Zylinder-System berechnet wird. Eine unmittelbare Phasenmessung, wie sie zum Beispiel bei bekannten Mischern erfolgt, ist nicht mehr erforderlich. Verstärkerbausteine können entfallen. Die Six-Port-Schaltung ist ein im Wesentlichen lineares Element, welches im Gegensatz zum Mischer pegelunabhängig arbeitet. Die Schaltungselemente bei dem Prinzip der Six-Port-Schaltung lassen sich HF-technisch einfacher reflexionsarm anpassen, was zu einer besseren Signalqualität führt. Durch die einfache Ausführung in Leiterbahntechnologie sind weniger hohe Anforderungen an die Leiterplattentechnologie gestellt, und eine preiswertere Realisierung ist möglich.

Auch ein Phasen- und Amplitudenvergleicher, der alternativ zu einer Six-Port-Schaltung mit Hilfe von Halbleiterdioden und Leitungsstrukturen auf einer Leiterplatte aufgebaut ist, ändert sein Messergebnis in Abhängigkeit vom Feuchtegehalt der Leiterplatte. Allerdings sind bei einem solchen die Messfehler numerisch deutlich schwieriger zu bewältigen, da die Reflexionsfaktoren solcher Halbleiter-Mischer von der Oszillatoramplitude abhängen und Mischprodukte bei unterschiedlichsten Frequenzen entstehen, die sich wiederum feuchteabhängig unterschiedlich ausbreiten und mehrfach reflektiert rückwirken und dadurch zusätzlich das Messergebnis beeinflussen können.

Beim Six-Port-Reflektometer bzw. bei der Six-Port-Schaltung entstehen infolge der Linearität keine zusätzlichen Frequenzen, die bei der Kompensation berücksichtigt werden müssten. Die Reflexionsfaktoren sind im Gegensatz zu einem Halbleitermischer über verschiedene Amplitudenwerte konstant, d.h. bei der Kompensation muss der Oszillatorausgangspegel nicht berücksichtigt werden.

Da die hinlaufenden Signale und die rücklaufenden Signale bis zur Six-Port-Schaltung 9 über unterschiedlich lange Leiterbahnen geführt werden müssen, wird die Verzögerungseinrichtung 16 als Kompensationseinrichtung in die Zuleitung des hinführenden Signals zum Phasen- und Amplitudenvergleicher 17 geschaltet, um bei eventuellen Veränderungen der dielektrischen Eigenschaften einen Laufzeitausgleich zu erreichen. Wird das dielektrische Verhalten der Leitung nämlich durch Feuchtigkeit verändert, so ändert sich die Laufzeit dieser Leitung. In der Folge sieht der Phasen- und Amplitudenvergleicher einen anderen Phasenwinkel des Reflexionsfaktors. Die Verzögerungseinrichtung 16 ist den gleichen Feuchtigkeitseinflüssen ausgesetzt wie die Leitung zwischen Richtkoppler und Mikrowellen-Koppelsonde, das heißt, die Ausbreitungsgeschwindigkeit auf dieser Leitung ändert sich in gleicher Weise wie diejenige auf der Leitung zwischen der Mikrowellen-Koppelsonde 19 und dem Richtkoppler 15. Dabei laufen die Signale jeweils zweimal über die Leitung zwischen Richtkoppler 15 und Mikrowellen-Koppelsonde 19, nämlich hin und zurück. Durch geeignet gewählte Länge der verzögerungseinrichtung 16 beziehungsweise Verzögerungsleitung kann erreicht werden, dass sich die Feuchtigkeitseinflüsse aufheben.

Diese Feuchtigkeitskompensation durch die Verzögerungseinrichtung 16 hat jedoch ihre Grenzen. Es kann zwar erreicht werden, dass punktuell die Feuchtigkeitskompensation gelingt beziehungsweise im Mittel gelingt, jedoch kann aufgrund der Unvollkommenheit der Leitungsschaltungen, wie sie auch im Phasen- und Amplitudenvergleicher 17 beziehungsweise der Six-Port-Schaltung 9 verwendet werden, nicht für alle möglichen zu messenden Reflexionsfaktoren eine ideale Kompensation erreicht werden, das heißt, die verzögerungseinrichtung 16 kann nur eine Grobkompensation darstellen. Die verbleibenden Feuchtigkeitsabhängigkeiten und Abhängigkeiten von Veränderungen der Geometrie sind zu kompliziert, als dass sie durch einfache Schaltungsmaßnahmen korrigiert werden können. Hierzu muss der Mikrocontroller jedoch eine Information über das gegenwärtige Laufzeitverhalten der Leiterbahnen besitzen. Diese bekommt er über die Laufzeit-Messeinrichtung 13.

Die vom HF-Generator 11 in die Laufzeit-Messeinrichtung 13 eingespeisten HF-Signale werden über einen ersten Richt-koppler 35 zum Teil in eine Messleitung 36 eingespeist und von dieser über einen weiteren Richtkoppler 37 wieder zum Teil ausgekoppelt und durch eine als Pegelmesseinrichtung dienende Detektor-Schaltung 38 erfasst. Die Messleitung 36 besitzt eine Länge von λ/2. Der HF-Generator 11 kann durch den Mikrocontroller 18 gesteuert unterschiedliche Ausgangsfrequenzen erzeugen. Gemäß Figur 4 werden nacheinander unterschiedliche, stufenweise sich verändernde Messfrequenzen der Laufzeit-Messeinrichtung 13 zugeführt. Bei einer Frequenz mit der Wellenlänge λ wird resonanzbedingt der größte Pegel U_{R} übertragen, wobei die Resonanzfrequenz die Frequenz f2_{R} ist. Verändert sich die Messleitung 16 beispielsweise durch Feuchtigkeitseinflüsse, so verschiebt sich die Resonanzfrequenz beispielsweise zur Frequenz f1_{R} hin. Die Verschiebung der Resonanzfrequenz ist ein Maß für Veränderungen in der Laufzeit, wobei die Auswertung im Mikrocontroller 18 erfolgt. Diese Information wird dann zur Kompensation von entsprechenden Laufzeitveränderungen in den übrigen Leitungen herangezogen und berechnet. An die zur Laufzeit-Messeinrichtung 13 hinführende Leitung ist direkt eine weitere Detektor-Schaltung 39 angeschlossen, die ebenfalls mit dem Mikrocontroller 18 verbunden ist. Durch Pegelvergleich der beiden Detektor-Schaltungen 38, 39 lässt sich eine noch genauere Kompensation für die Laufzeit berechnen.

Anstelle von Richtkopplern können prinzipiell auch andere Koppler zum Auskoppeln von Teilen des jeweiligen Signals treten, wie zum Beispiel Lange-Koppler, Rat-Race-Koppler und Wilkinson-Teiler. Weiterhin kann die konstruktive Ausgestaltung der Six-Port-Schaltung auch vom Ausführungsbeispiel abweichen und beispielsweise gemäß dem angegebenen Stand der Technik ausgeführt sein.

Zusammenfassend betrifft die Erfindung neben dem fluidischen Zylinder mit einer Mikrowellen-Messanordnung zur Erfassung wenigstens eines Parameters somit auch ein Verfahren zur Erfassung wenigstens eines Parameters in einem fluidischen Zylinder mit Hilfe einer Mikrowellen-Messanordnung, die eine Mikrowellen-Koppelsonde (19) in oder an einem Zylinderdeckel des Zylinders (21) aufweist zur Einkopplung einer Hohlleiterwelle in den angrenzenden zylinderraum und zur Auskopplung und Erfassung der von einem Kolben (23) im Zylinder (21) reflektierten Hohlleiterwelle, wobei die Mikrowellen-xoppelsonde (19) durch einen HF-Generator (11) mit HF-Signalen versorgt wird und der wenigstens eine Parameter durch Vergleich der der Mikrowellen-Koppelsonde (19) zugeleiteten hinlaufenden HF-Signale mit den aus der reflektierten Hohlleiterwelle erzeugten rücklaufenden HF-Signalen mittels einer Auswerteeinrichtung erfasst wird, wobei Teile der vorlaufenden und rücklaufenden HF-Signale mit Hilfe wenigstens eines Koppelglieds (15) ausgekoppelt werden und ein Phasen- und Amplitudenvergleich durch additive Überlagerung der ausgekoppelten Teile der vorlaufenden und rücklaufenden HF-Signale mit anschließender Pegelmessung erfolgt, und dass aus den erfassten Pegelwerten die Parameter abgeleitet werden.

## Patentansprüche

1. Fluidischer Zylinder mit einer Mikrowellen-Messanordnung zur Erfassung wenigstens eines Parameters, die eine Mikro-wellen-Koppelsonde (19) in oder an einem Zylinderdeckel des Zylinders (21) aufweist zur Einkopplung einer Hohlleiterwelle in den angrenzenden Zylinderraum und zur Auskopplung und Erfassung der von einem Kolben (23) im Zylinder (21) reflektierten Hohlleiterwelle, mit einem HF-Generator (11) zur Versorgung der Mikrowellen-Koppelsonde (19) mit HF-Signalen und mit einer Auswerteeinrichtung zur Erfassung des wenigstens einen Parameters durch Vergleich der der Mikrowellen-Koppel-sonde (19) zugeleiteten hinlaufenden HF-Signale mit den aus der reflektierten Hohlleiterwelle erzeugten rücklaufenden HF-Signalen, **dadurch gekennzeichnet, dass** wenigstens ein Teil der Auswerteeinrichtung und die als Leiterbahnen ausgebildeten HF-Leitungen von und zu der Auswerteeinrichtung auf einer Platine (10) angeordnet sind, und dass auf dieser Platine (10) eine Laufzeit-Messeinrichtung (13) zur Erfassung der Platinen-Feuchtigkeit und/oder Ausbreitungsgeschwindigkeit der HF-Signale angeordnet ist, wobei die Auswerteeinrichtung zur Korrektur des wenigstens einen erfassten Parameters in Abhängigkeit der Signale der Laufzeit-Messeinrichtung (13) ausgebildet ist.

2. Fluidischer Zylinder nach Anspruch 1, **dadurch gekennzeichnet, dass** die Auswerteeinrichtung einen Phasen- und Amplitudenvergleicher (17) und einen damit verbundenen Mikrocontroller (18) aufweist.

3. Fluidischer Zylinder nach Anspruch 2, **dadurch gekennzeichnet, dass** der Phasen- und Amplitudenvergleicher (17) Mittel zur additiven Überlagerung von Teilen der vorlaufenden und rücklaufenden HF-Signale und Mittel zur Pegelmessung der überlagerten Signale aufweist.

4. Fluidischer Zylinder nach Anspruch 2 oder 3, **dadurch gekennzeichnet, dass** der auf der Platine angeordnete Phasen- und Amplitudenvergleicher (17) durch Leiterbahnenelemente gebildet wird und insbesondere als Six-Port-Schaltung (Six-Port-Device) ausgebildet ist.

5. Fluidischer Zylinder nach Anspruch 4, **dadurch gekennzeichnet, dass** der als Six-Port-Schaltung (9) ausgebildete Phasen- und Amplitudenvergleicher (17) wenigstens drei 90grad-Hybrid-Koppler (30-32) und einen Wilkinson-Teiler (33) aufweist, wobei Leistungs- und/oder Pegelmesseinrichtungen (26-29) für **dadurch** gebildete, um jeweils 90° versetzte und überlagerte Signale der zur Koppelsonde (19) hinlaufenden und von dieser rücklaufenden HF-Signale vorgesehen sind, die mit dem Mikrocontroller (18) zur Auswertung verbunden sind.

6. Fluidischer Zylinder nach Anspruch 5, **dadurch gekennzeichnet, dass** die 90grad-Hybrid-Koppler (30-32) aus jeweils vier ringförmig aneinandergeschalteten Leiterbahnstücken bestehen, die jeweils eine Länge von im Wesentlichen λ/4 aufweisen.

7. Fluidischer Zylinder nach einem der vorhergehenden Ansprüche, **dadurch gekennzeichnet, dass** in der zur Mikrowellen-Koppelsonde (19) führenden Leiterbahn für die HF-Signale ein Koppelglied (15) zur Auskopplung und/oder additiven Überlagerung eines Teils der hinlaufenden und eines Teils der von der Mikrowellen-Koppelsonde (19) rücklaufenden HF-Signale angeordnet ist.

8. Fluidischer Zylinder nach Anspruch 7, **dadurch gekennzeichnet, dass** das Koppelglied (15) als Richtkoppler, Lange-Koppler, Wilkinson-Teiler, 90grad-Hybrid-Koppler und/oder Ra-Race-Koppler ausgebildet ist oder wenigstens einen derselben aufweist.

9. Fluidischer Zylinder nach Anspruch 7 oder 8, **dadurch gekennzeichnet, dass** in einer der beiden das Koppelglied (15) mit dem Phasen- und Amplitudenvergleicher (17) verbindenden Leiterbahnen eine ebenfalls als Leiterbahn ausgebildete Verzögerungseinrichtung (16) zum Ausgleich der Länge der Leiterbahn zwischen Dem Koppelglied (15) und der Koppelsonde (19) angeordnet ist.

10. Fluidischer Zylinder nach einem der vorhergehenden Ansprüche, **dadurch gekennzeichnet, dass** die Laufzeit-Messeinrichtung (13) im Wesentlichen aus Leiterbahnstücken besteht.

11. Fluidischer Zylinder nach Anspruch 10, **dadurch gekennzeichnet, dass** die Laufzeit-Messeinrichtung (13) aus einem Mess-Leiterbahnstück (36) beseht, das eine insbesondere mit dem HF-Generator (11) verbundene Einkopplungseinrichtung (35) und eine Auskopplungseinrichtung (37) aufweist, die mit einer Pegel-Messeinrichtung (38) verbunden ist, wobei das Mess-Leiterbahnstück (36) vorzugsweise eine Länge von im Wesentlichen λ/2 oder vielfachen von λ/4 aufweist.

12. Fluidischer Zylinder nach Anspruch 10 oder 11, **dadurch gekennzeichnet, dass** die Resonanz-Messeinrichtung (38) eine mit dem Mikrocontroller (18) verbundene Pegelmesseinrichtung aufweist, wobei der Mikrocontroller (18) Mittel zur stufenweisen Frequenzveränderung des HF-Generators zur Erfassung der jeweiligen Resonanzfrequenz besitzt.

13. Fluidischer Zylinder nach einem der Ansprüche 10 bis 12, **dadurch gekennzeichnet, dass** eine mit dem Mikrocontroller (18) verbundene weitere Pegel- und/oder Resonanzmesseinrichtung (39) zur Erfassung der in die Laufzeit-Messeinrichtung (13) eingespeisten HF-Leistung vorgesehen ist.

14. Fluidischer Zylinder nach einem der vorhergehenden Ansprüche, **dadurch gekennzeichnet, dass** eine den HF-Generator (11) mit der Laufzeit-Messeinrichtung (13) verbindende Leiterbahn einen Richtkoppler (14) oder ein anderes Koppelglied zur Auskopplung von zur Mikrowellen-Koppelsonde (19) geführten HF-Signalen aufweist.

15. Fluidischer Zylinder nach einem der vorhergehenden Ansprüche, **dadurch gekennzeichnet, dass** die Ausgangssignale des HF-Generators (11) über ein Oberwellen-Filter (12) geführt sind.
